# EUROPEAN PATENT SPECIFICATION

(11) **EP 1 332 666 B1**
(45) Date of publication and mention of the grant of the patent: **06.12.2006**
(21) Application number: 02075271.3
(22) Date of filing: 24.01.2002
(51) Int. Cl.: A01G 9/02

(54) **Flower pot applicable for indoors and outdoors**
Blumentopf für Innen und Aussen
Pot de fleur pour application à l'intérieur et à l'extérieur

(43) Date of publication of application: 06.08.2003
(73) Proprietor: Mai, Chuan-Liang, Hsintien City, Taipei Hsien (TW)
(72) Inventor: Mai, Chuan-Liang, Hsintien City, Taipei Hsien (TW)
(74) Representative: Vernout, Robert

(56) References cited:
- EP-A- 0 750 838
- CH-A- 614 346
- DE-A- 1 932 110
- FR-A- 2 190 356
- US-A- 5 557 885
- US-A- 6 145 250

## Description

The present invention relates to a flower pot in accordance with the preamble of claim 1. Such a flower pot is described in US-A-6 145 250. More particularly the invention relates to a flower pot applicable for indoor and outdoor use.

Normally, a flower pot has a disk placed beneath the flower pot to receive water draining through the flower pot to prevent the draining water from spoiling the shelf, table etc on which the flower pot rests. After a period of time, the disk may become full of water and then acts as a breeding ground for mosquitoes and other insects. Furthermore, as most plants cannot tolerate sodden soil, the accumulated water in the disk will cause the death of the plant in the flower pot. To overcome the shortcomings, a new kind of flower pot is introduced to the market, which is described in US-A-6 145 250. The flower pot has a grid mounted on a bottom of the flower pot, a water bucket provided beneath the grid and a pump provided in the flower pot and composed with a tube extending through the flower pot and into the water bucket so that the user is able to use the pump to send water from the water bucket to water the plant in the flower pot. After watering, excess water will flow through the grid and into the water bucket for re-use. This, indeed, is an improvement over the conventional flower pot and the drawback of having the root ruined by the excess accumulated water is overcome. However, when this kind of flower pot is placed outdoors, especially on rainy days the water will accumulate in the bucket quickly and eventually the water level in the water bucket rises to saturate the root and causes permanent damage to the plant in the flower pot.

The present invention tends to provide an improved flower pot to mitigate and obviate the aforementioned problems.

This is achieved according to the invention by a flower pot in accordance with claim 1.

The flower pot has according to a further aspect of the invention a unidirectional valve mounted on a wall of the water bucket so that when the water level in the bucket exceeds the position where the unidirectional valve is mounted, the excess water will automatically flow out of the water bucket and so prevent potential damage to the plant. The flower pot thus has a unidirectional valve mounted on a wall of a water bucket provided beneath the flower pot so as to discharge excess water in the water bucket when the flower pot is put outdoors on rainy days.

A watering nozzle is according to a further aspect of the invention provided communicating with the outlet of the pump. The watering nozzle is annular and has three different layers of holes defined in a circumference of the nozzle so that the pumped-up water from the water bucket is able to be dispersed into different areas in the flower pot to uniformly nourish the plant.

According to a further aspect of the invention the water bucket has a unidirectional valve mounted on a wall of the water bucket so that when the water lever rises over the position where the unidirectional valve is mounted, excess water is able to automatically flow out of the water bucket.

Furthermore, the unidirectional valve has a cap detachably connected to an outlet of the unidirectional valve so that when the flower pot together with the water bucket is placed indoors, the cap is able to cover the outlet of the unidirectional valve.

Other objects, advantages and novel features of the invention will become more apparent from the following detailed description when taken in conjunction with the accompanying drawings.

### In the drawings

Fig. 1 is a perspective view of the flower pot of the present invention;
Fig. 2 is an exploded perspective view of the flower pot in Fig. 1;
Fig. 3 is a side plan view of the flower pot in Fig. 1 with partial in section;
Fig. 4 is a schematic perspective view showing that a plant in the flower pot of the present invention;
Fig. 5 is a schematic view showing that excess water will automatically flow out of the water bucket from the unidirectional valve without causing any damage to the plant in the flower pot;
Fig. 6 is a schematic view showing that when the flower pot is placed indoors, the cap is able to sealingly close the outlet of the unidirectional valve to stop the outflow of water from the water bucket; and
Fig. 7 is an embodiment of the present invention, wherein the concept of the invention is implemented in a garden, which shows that the detailed description is for explanation purpose only and sets no limitation to the application of the concept of the present invention.

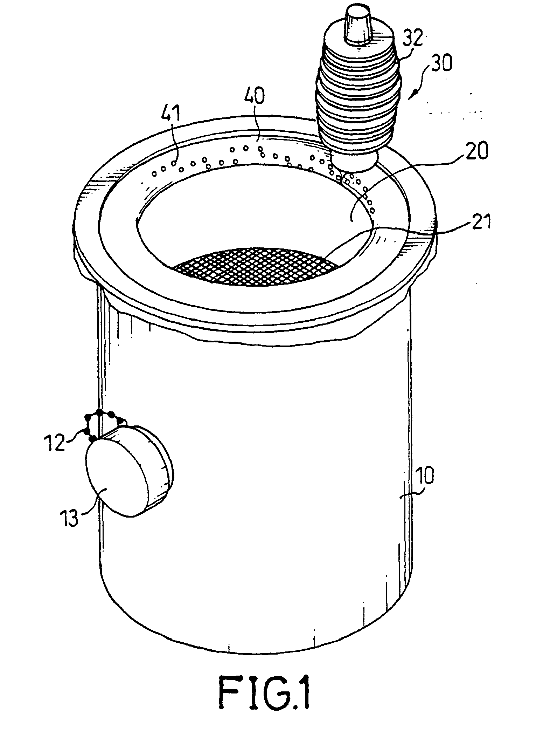

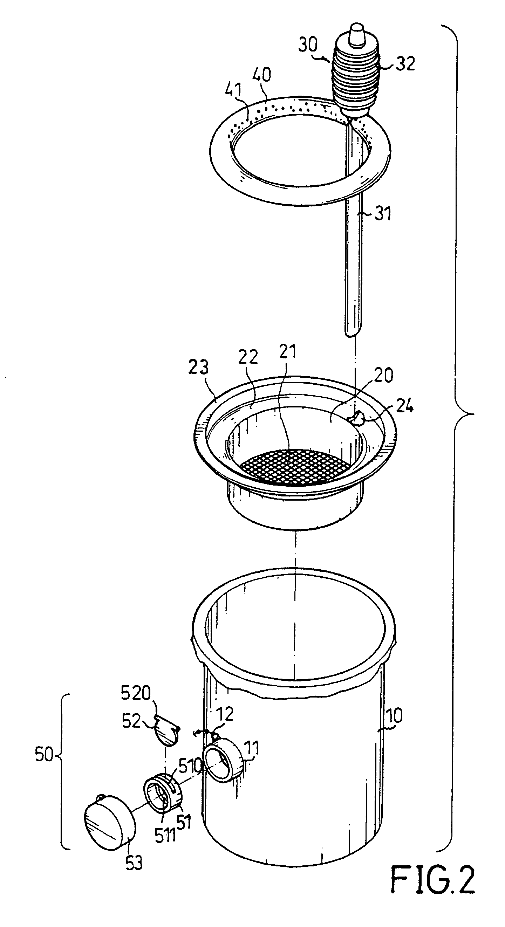

With reference to Figs. 1 and 2, the flower pot in accordance with the present invention has a water bucket 10, a pot received in and supported by a rim of the water bucket 10 and a pump 30.

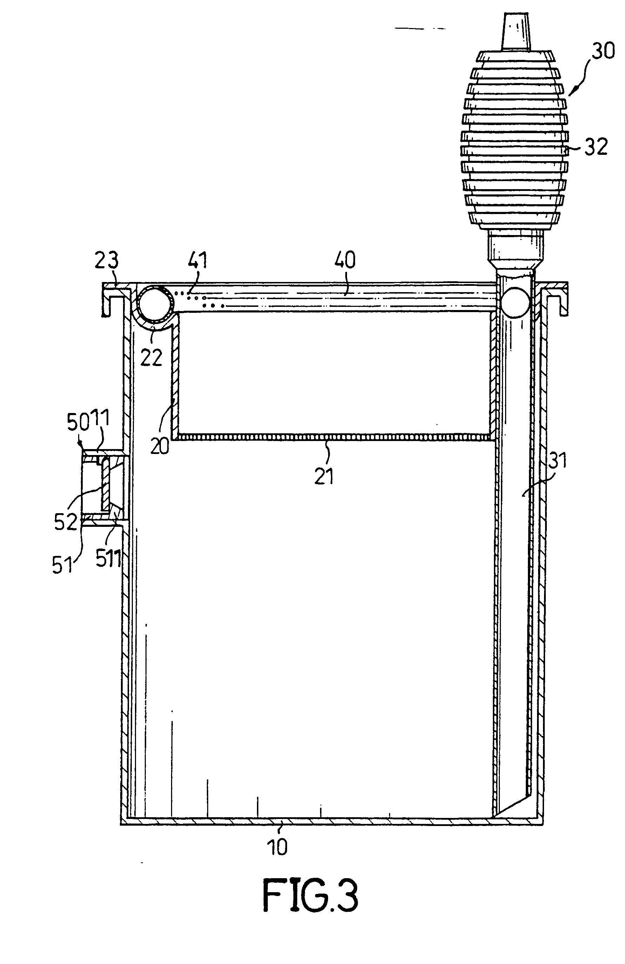

The water bucket 10 has an outlet 11 for mounting a unidirectional valve 50. The unidirectional valve 50 has a tubular connector 51 securely received in and engaged with the outlet 11 and a regulating plate 52 pivotally received in the tubular connector 51. The tubular connector 51 has an elongated through hole 510 defined in a circumference of the tubular connector 51. The regulating plate 52 has two extensions 520 each extending to an opposite direction relative to each other. Further, the length between two distal ends of the extensions 520 is larger than the distance between two distal ends of the elongated through hole 510. Therefore, when the regulating plate 52 is inserted into the tubular connector 51 via the elongated through hole 510, the two extensions 520 are supported by peripheries defining the two distal ends of the elongated through hole 510. As shown particularly in Fig. 3, the tubular connector 51 further comprises a flange 511 formed on an inner periphery of the tubular connector 51. In this embodiment, the regulating plate 52, preferably, is round and has a diameter smaller than that of an inner diameter of the tubular connector 51, such that after the regulating plate 52 is fitted to, possibly alternative-supported by the two distal ends of the elongated through hole 510, the regulating plate 52 can only pivot to one direction away from the through hole 510 due to the limitation of the flange 511. A cap 53 is provided to connect to the outlet 11 of the water bucket 10 by means of a chain 12 and is able to seal the outlet 11.

The pot 20 is detachably receivable in the water bucket 10 and has a grid 21, a first step 22, a second step 23 and a through hole 24. The grid 21 is provided on a bottom of the pot 20. The first step 22 has a diameter smaller than that of an inner diameter of the water bucket 10 and the second step 23 has a diameter larger than that of an outer diameter of the water bucket 10.

Referring to Figs. 2 and 3, the pump 30 has a tube 31 extending out from a bottom of a bellow-like body 32 and an annular water dispersal tube 40 communicating with both the bellow-like body 32 and the tube 31. The annular water dispersal tube 40 has an outer diameter slightly smaller than that of the first step 22.

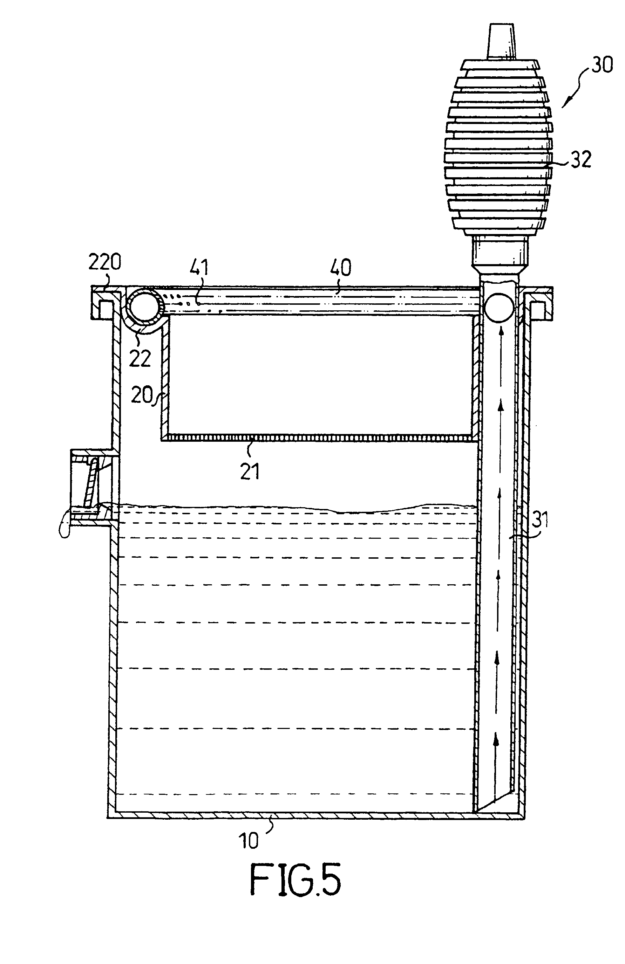

When the foregoing parts are assembled as shown in Figs. 3 and 5, the pot 20 is first received in the water bucket 10 with the second step 23 supported by a rim of the water bucket 10. Then, the tube 31 of the pump 30 extends through the through hole 24 of the pot 20 and into the water bucket 10. Due to the diameter relationship between the annular water dispersal tube 40 and the first step 22, the annular water dispersal tube 40 is able to be supported by the first step 22 after the extension of the tube 31 into the water bucket 10. By means of the support of the first step 22, the pump 30 is then positioned in the pot 20, as shown in Fig. 3.

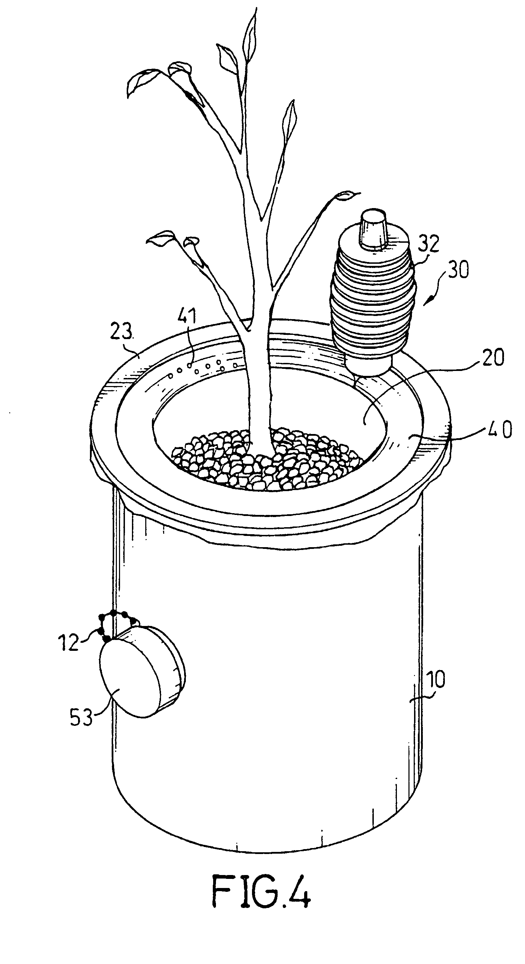

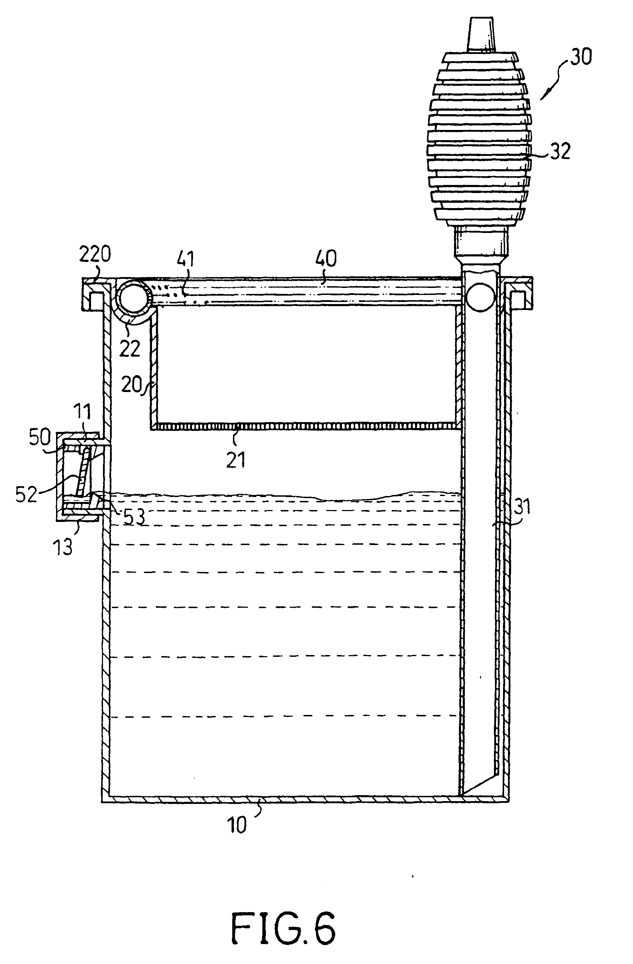

With reference to Figs. 4 and 6, when the flower pot of the present invention is placed indoors and is subject to only controlled watering, the user needs not worry about the possibility of too much water in the water bucket 10.Therefore, the user secures the cap 53 to the outlet 11 of the water bucket 10 to stop water from flowing out of the water bucket 10, thereby preventing possible water damage to furniture and furnishings.

When the flower pot of the present invention is placed outdoors, as shown in Fig. 5, because there is a potential danger that the water level in the water bucket 10 may exceed the grid 21 of the pot 20 to endanger the plant, the user removes the cap 53 to allow the regulating plate 52 to pivot in the tubular connector 51. That is, when the water level in the water bucket 10 exceeds a position where the unidirectional valve 50 is mounted, the excess water will automatically flow out of the water bucket 10.

It is to be noted that to ensure the water level in the water bucket 10 does not exceed the grid 21 of the pot 20, the position where the unidirectional valve 50 is mounted is always under the grid 21.

Furthermore, no matter the flower pot of the present invention is placed indoors or outdoors, when the user presses the bellow-like body 32, the water in the water bucket 10 is pumped upward and then flows into the annular water dispersal tube 40 that has three different layers of holes 41 defined in a periphery of the annular water dispersal tube 40. After the water flows into the annular water dispersal tube 40, the water is able to flow out of the annular water dispersal tube 40 and then spread to different areas in the pot 20. Thus, isolated dry spots in the soil are eliminated and the plant can flourish.

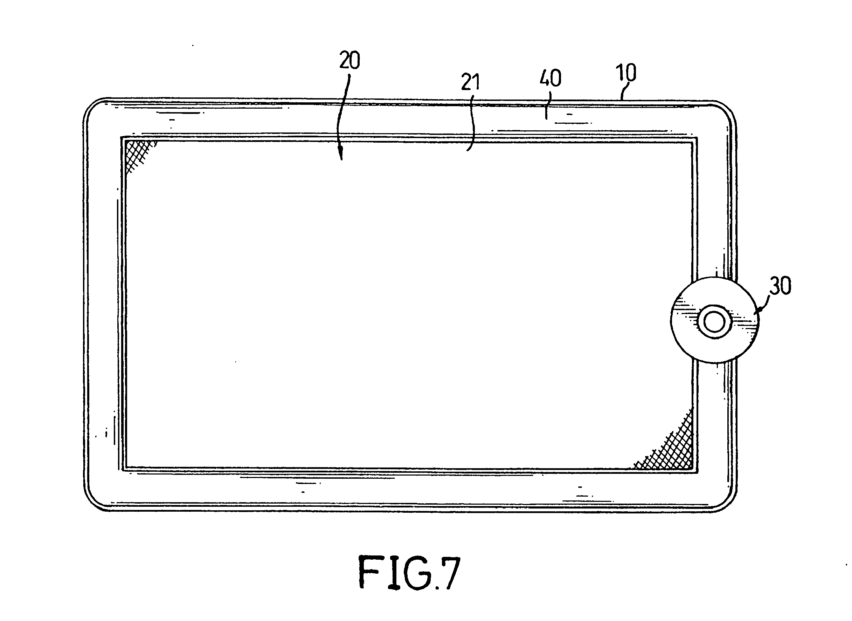

With reference to Fig. 7, the design of the present invention can also be implemented in a garden, where the water bucket 10 is placed in a flower bed such that many plants can benefit from the features of the invention. The pot 20 is placed on top of and supported by the water bucket 10. The pump 30 is placed aside of the pot 20 so as to pump water from the water bucket 10 to water the plants not shown in the pot 20. It is to be appreciated that the facility of saving water in the water bucket during rainy days for reuse during dry weather is particularly useful. As can be seen, variations in the configurations of the water bucket 10 and pot 20 are possible and easily understood by those skilled in the art.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A flower pot having a water bucket (10) for containing water therein, a pot (20) partly receivable in the water bucket (10), and a pump (30) with a tube (31) extending through the pot (20) and into the water bucket (10) for transfering water from the water bucket (10) into the pot (20),
**characterized in that** the water bucket (10) is provided with an outlet (11) having a unidirectional valve (50) mounted thereon, such that excess water inside the water bucket (10) is discharged in a direction out of the water bucket (10).

2. The flower pot as claimed in claim 1 further comprising a cap (13) detachably connected to the outlet (11) of the water bucket (10) to seal the outlet (11) to stop water outflow.

3. The flower pot as claimed in claim 2, further having an annular connector (51) adapted to be connected to the outlet (11) of the water bucket (10) and a regulating plate (52) pivotally received in the annular connector (51) from an elongated through hole (510) defined in a circumference of the annular connector (51).

4. The flower pot as claimed in claim 3, wherein the cap (13) is connected to the water bucket (10) by a chain (12).

5. The flower pot as claimed in any one of the previous claims 1 -4, wherein the pot (20) further comprises a first step (22) having an outer diameter adapted to be slightly smaller than an inner diameter of the water bucket (10) and a second step (23) having an outer diameter adapted to be slightly larger than an outer diameter of the water bucket (10) so that after the pot (20) is received in the water bucket (10), the pot is supported by the water bucket (10).

6. The flower pot as claimed in claim 5, wherein the pump (30) has an annular water dispersal tube (40) adapted to communicate with a tube (31) which extends from a bottom of a bellow body (32) of the pump through the pot (20) and into the water bucket (10), the annular water dispersal tube (40) has holes (41) defined in a periphery of the annular water dispersal tube (40) so as to spread the pumped-up water from the water bucket (10) to different areas in the pot (20).

7. The flower pot as claimed in claim 6, wherein the annular water dispersal tube (40) is supported by the first step (22) so as to position the pump (30) relative to the pot (20).

## Patentansprüche

1. Blumentopf mit einem Wassereimer (10) zur Aufnahme von Wasser darin, einem Topf (20), der teilweise in dem Wassereimer (10) aufnehmbar ist, und einer Pumpe (30) mit einem Rohr (31), das sich durch den Topf (20) und in den Wassereimer (10) zum Überführen von Wasser aus dem Wassereimer (10) in den Topf (20) erstreckt, **dadurch gekennzeichnet, daß** der Wassereimer (10) mit einem Auslaß (11) mit einem daran montierten Einwegeventil (50) bereitgestellt ist, so daß überschüssiges Wasser innerhalb des Wassereimers (10) in einer Richtung aus dem Wassereimer (10) heraus abgeführt wird.

2. Blumentopf nach Anspruch 1, weiter umfassend eine Kappe (13), die abnehmbar mit dem Auslaß (11) des Wassereimers (10) verbunden ist, um den Auslaß (11) abzudichten, um Wasserausfluß zu stoppen.

3. Blumentopf nach Anspruch 2, weiter mit einem ringförmigen Anschlußteil (51), das angepaßt ist, um mit dem Auslaß (11) des Wassereimers (10) verbunden zu werden, und einer regulierenden Platte (52), die schwenkbar innerhalb des ringförmigen Anschlußteils (51) über eine längliche Durchlaßöffnung (510), die in einem Umfang des ringförmigen Anschlußteils (51) definiert ist, aufgenommen ist.

4. Blumentopf nach Anspruch 3, wobei die Kappe (13) mit dem Wassereimer (10) über eine Kette (12) verbunden ist.

5. Blumentopf nach einem der vorangehenden Ansprüche 1 bis 4, wobei der Topf (20) weiter eine erste Stufe (22) mit einem äußeren Durchmesser umfaßt, der angepaßt ist, um etwas kleiner zu sein als ein innerer Durchmesser des Wassereimers (10), und eine zweite Stufe (23) mit einem äußeren Durchmesser, der angepaßt ist, um etwas größer zu sein als ein äußerer Durchmesser des Wassereimers (10), so daß, nachdem der Topf (20) im Wassereimer (10) aufgenommen ist, der Topf durch den Wassereimer (10) gestützt wird.

6. Blumentopf nach Anspruch 5, wobei die Pumpe (30) eine ringförmige Wasserverteilungsleitung (40) aufweist, die angepaßt ist, um mit einer Röhre (31) zu kommunizieren, die sich von einem Boden eines Balgkörpers (32) der Pumpe durch den Topf (20) und in den Wassereimer (10) erstreckt, wobei die ringförmige Wasserverteilungsleitung (40) Löcher (41) aufweist, die in einer Peripherie der ringförmigen Wasserverteilungsleitung (40) definiert sind, um das abgepumpte Wasser aus dem Wassereimer (10) zu unterschiedlichen Bereichen in dem Topf (20) zu verteilen.

7. Blumentopf nach Anspruch 6, wobei die ringförmige Wasserverteilungsleitung (40) durch die erste Stufe (22) gestützt ist, um die Pumpe (30) relativ zum Topf (20) zu positionieren.

## Revendications

1. Pot de fleurs ayant un réceptacle à eau (10) destiné à contenir de l'eau, un pot (20) destiné à se loger partiellement dans le réservoir à eau (10), et une pompe (30) munie d'un tube (31) qui s'étend à travers le pot (20) et dans le réceptacle à eau (10) et destiné à transférer l'eau du réceptacle à eau (10) au pot (20),
**caractérisé en ce que** le réceptacle à eau (10) possède une sortie (11) munie d'un clapet (50) monté sur elle afin que l'excès d'eau dans le réceptacle à eau (10) soit évacué vers l'extérieur du réceptacle à eau (10).

2. Pot de fleurs selon la revendication 1, comprenant en outre un capuchon (13) raccordé de façon amovible à la sortie (11) du réceptacle à eau (10) pour fermer de manière étanche la sortie (11) et arrêter l'écoulement de l'eau vers l'extérieur.

3. Pot de fleurs selon la revendication 2, comprenant en outre un raccord annulaire (51) destiné à être raccordé à la sortie (11) du réceptacle à eau (10) et une plaque de régulation (52) logée de façon pivotante dans le raccord annulaire (51) à partir d'un trou débouchant allongé (510) délimité à la circonférence du raccord annulaire (51).

4. Pot de fleurs selon la revendication 3, dans lequel le capuchon (13) est raccordé au réceptacle à eau (10) par une chaîne (12).

5. Pot de fleurs selon l'une quelconque des revendications précédentes 1 à 4, dans lequel le pot (20) comporte en outre un premier gradin (22) ayant un diamètre externe destiné à être légèrement plus petit que le diamètre interne du réceptacle à eau (10) et un second gradin (23) ayant un diamètre externe destiné à être légèrement plus grand que le diamètre externe du réceptacle à eau (10), de sorte que, après que le pot (20) a été logé dans le réceptacle à eau (10), le pot est supporté par le réceptacle à eau (10).

6. Pot de fleurs selon la revendication 5, dans lequel la pompe (30) a un tube annulaire (40) de dispersion d'eau destiné à communiquer avec un tube (31) qui s'étend depuis le fond d'un corps de soufflet (32) de la pompe dans le pot (20) et dans le réceptacle à eau (10), le tube annulaire (40) de dispersion d'eau ayant des trous (41) délimités à la périphérie du tube annulaire (40) de dispersion d'eau afin que l'eau pompée dans le réceptacle à eau (10) soit répartie dans différentes régions dans le pot (20).

7. Pot de fleurs selon la revendication 6, dans lequel le tube annulaire (40) de dispersion d'eau est supporté par le premier gradin (22) afin que la pompe (30) soit positionnée par rapport au pot (20).
